# EUROPEAN PATENT APPLICATION

(11) **EP 1 465 401 A2**
(43) Date of publication of application: **06.10.2004**
(21) Application number: 04251237.6
(22) Date of filing: 03.03.2004
(51) Int. Cl.: H04N 1/00, H04N 1/21

(54) **Transferring data from a digital imaging apparatus**

(30) Priority: 27.03.2003 KR 2003019252; 30.04.2003 KR 2003027797
(71) Applicant: Samsung Electronics Co., Ltd., Suwon-si, Gyeonggi-do 442-742 (KR)
(72) Inventor: Choi, Juang-hwan, Yeongtong-gu, Suwon-si, Gyeonggi-do (KR)
(74) Representative: Geary, Stuart Lloyd

(57) **Abstract**

A digital imaging apparatus 200 is capable of transmitting image data to an external apparatus, such as a PC 100, in two or more data transfer modes. For example, previously stored data may be transmitted in a first data transfer mode, while data may be transmitted as it is acquired in a second, real-time, transfer mode. The digital imaging apparatus 200 comprises user input means (250, 254) through which a data transfer mode may be selected. The digital imaging apparatus 200 transmits a descriptor corresponding to a driving program to be run on the PC 100 for handling image data transmitted in the selected data transfer mode. The data transfer mode may be selected before the digital imaging apparatus 200 and PC 100 are connected and the descriptor transmitted to the PC 100 when this connection is made.

## Description

The present invention relates to a digital imaging apparatus and a method for transferring image data to an external apparatus in accordance with a selected data transfer mode.

A digital imaging apparatus such as digital video camera (DVC) converts an optical image of an object into an electric signal using a charged coupled device (CCD), and then converts the analog electrical signal into a digitized signal.

Following recent innovations, such digital imaging apparatus can perform fast data communications with external digital equipment, for example, a PC, via a universal serial bus (USB) interface without corrupting the digital signal. A user of the PC can then edit the transmitted image data using editing software installed in the PC.

Existing digital imaging apparatus provide two modes of data transfer. One is a real-time streaming mode, where image data is transmitted to the PC on a real-time basis for display on the PC's display device. The other is a mass storage mode, wherein image data that has been acquired, digitized and stored previously is retrieved and transmitted to the PC. The digital imaging apparatus incorporates firmware and the PC includes one or more software drivers for driving the respective modes. In a conventional digital imaging apparatus which incorporates the appropriate firmware, the digital imaging apparatus transfers data in one of the two modes in response to a run command for a selected mode from the PC, received via the USB interface.

However, problems may arise when using a digital imaging apparatus incorporating firmware for multiple modes. If the data transfer mode is not selected before the digital imaging apparatus is connected to PC, data communications between the digital imaging apparatus and the PC cannot proceed smoothly. This is because the conventional digital imaging apparatus cannot notify the PC of the driving mode to be used. Therefore, the PC cannot determine which driver to put on stand-by.

In addition, even if the apparatus receives a run command for a specific mode from the PC, the conventional digital imaging apparatus cannot determine which of the incorporated firmware must be accessed in order to carry out the required functions for the selected mode.

The present invention aims to provide a digital imaging apparatus that is capable of performing data communications smoothly with an external apparatus in more than one data transfer mode.

According to the invention, a digital imaging apparatus comprises means for acquiring image data, user input means for selecting a data transfer mode to be used to transfer the image data to an external apparatus and means for transmitting the image data to the external apparatus in accordance with the selected data transfer mode, wherein said digital imaging apparatus is arranged to transmit to the external apparatus an identifier associated with a program to be used for handling the image data when transferred in said selected data transfer mode.

This arrangement allows the image data to be handled by the external apparatus, for example, processed and displayed on a display device associated with the external apparatus, without requiring a user to manually input appropriate settings into the external apparatus. For example, the digital imaging apparatus may be capable of transferring previously stored image data in a first transfer mode and of transferring image data as it is acquired in a second, real-time, transfer mode, where each mode requires a different driver to be run on the external apparatus.

The data transfer mode may be selected before the digital imaging apparatus and external apparatus are connected. The identifier may then be transmitted to the external apparatus when this connection is made and/or in response to a command from the external apparatus, such as a data transfer command.

The invention also provides a method of transferring image data from a digital imaging apparatus to an external apparatus, said method comprising selecting a data transfer mode to be used for transferring said image data, connecting said digital imaging apparatus to said external apparatus in order to enable data communication therebetween, transmitting an identifier associated with a selected program to be used by the external apparatus for handling said image data, executing the selected program on the external apparatus and transferring said image data according to the selected data transfer mode.

Embodiments of the present invention will be described with reference to the accompanying drawings, in which:
Figure 1 is a schematic block diagram showing a digital imaging apparatus according to an embodiment of the present invention;
Figures 2A, 2B and 2C are views of a descriptor stored in the firmware storage unit shown in Figure 1;
Figure 3 is a view of a data transfer mode selection screen displayed by an on-screen display processing unit of the digital imaging apparatus shown in Figure 1;
Figure 4 is a schematic block diagram of a USB transmitting module of the digital imaging apparatus shown in Figure 1; and
Figure 5 is a flow chart illustrating a method for a data transfer mode selection using the digital imaging apparatus shown in Figure 1.

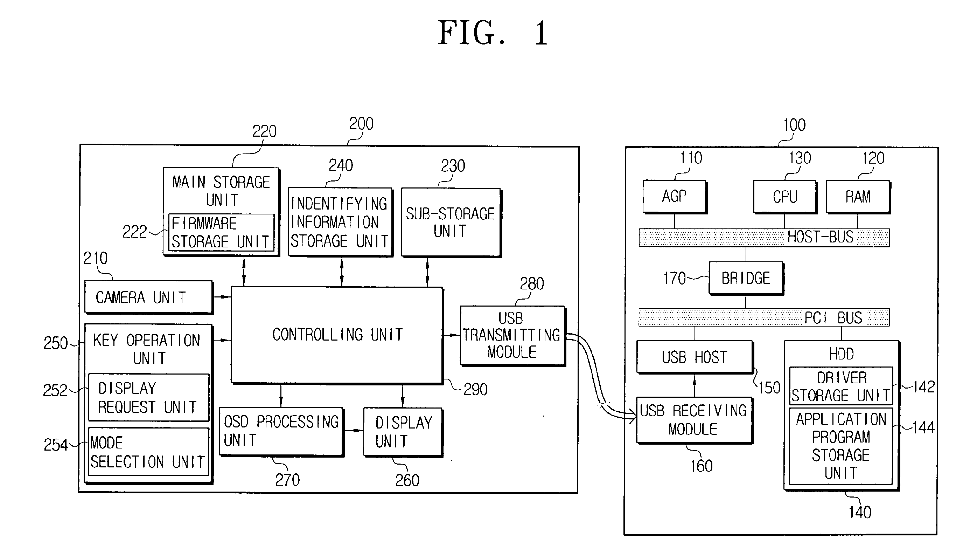

With reference to Figure 1, a PC 100 is arranged to receive data from a digital imaging apparatus 200, which, in this embodiment of the present invention, supports USB communication and is capable of transmitting data at a high speed. The digital imaging apparatus 200 transmits image data to the PC 100 via a USB transmission cable 300.

The PC 100 performs functions such as storage, editing, and playback of the image data, among other functions, using one or more application programs. The PC 100 comprises an advanced graphics port (AGP) 110, RAM 120 and CPU 130 that are connected to a host bus, together with a hard disk drive (HDD) 140, a USB host 150 and a USB receiving module 160 that are connected to a PCI bus.

A bridge 170 is provided for synchronizing clocks between the host bus and PCI bus and for controlling general data transmission, such as data transmission associated with RAM 120 and CPU 130, data transmission between RAM 120 and HDD 140, and video data transmission associated with AGP 110.

The RAM 120 stores programs that are retrieved from HDD 140 for implementation by the CPU 130 and also stores data that has been processed by CPU 130.

The HDD 140 stores operation system (OS) software which, in this particular embodiment, is a window-based operation system available from Microsoft® Corporation. The HDD 140 includes a driver storage unit 142 and an application program storage unit 144. The driver storage unit 142 stores a real-time streaming driver and a mass storage driver for handling data received from the digital imaging apparatus 200. The application program storage unit 144 stores various programs, including an application program corresponding to the real-time streaming driver. The USB host 150 receives digital signals from the digital imaging apparatus 200 via USB receiving module 160.

The digital imaging apparatus 200 comprises a camera unit 210, a main storage unit 220, a sub-storage unit 230, an identifying information storage unit 240, a key operation unit 250, a display unit 260, an on-screen display (OSD) processing unit 270, a USB transmitting module 280 and a controlling unit 290.

The camera unit 210 converts an optical image of the object that impinges upon a charged coupled device (not shown) into an analogue electric signal. The camera unit 210 then digitizes the analogue electric image signal, together with a sound signal recorded through a microphone (not shown). Hereinafter, the digitized signal output from the camera unit 210, which is composed of the image signal and/or the sound signal, is collectively referred to as image data.

The image data is selectively stored in the sub-storage unit 230 or sent to the PC 100 via the USB transmitting module 280.

The main storage unit 220 is a non-volatile memory, such as ROM, and stores a control program for driving the general operation of the digital imaging apparatus 200. The main storage unit 220 includes a firmware storage unit 222, which stores separate firmware for at least two image data transfer modes supported by the digital imaging apparatus 200 and a descriptor for each firmware. The at least two image data transfer modes are modes wherein image data acquired by the camera unit 210 is transmitted to PC 100 and are of different types. In this example, two data transfer modes are provided as follows.

A real-time streaming mode (first mode) allows the image data acquired by the camera unit 210 to be transmitted to PC 100 in real-time. The acquired image data can then be displayed on a display device (not shown) of PC 100.

A mass storage mode (second mode) allows the transmission of at least one file of image data selected by the PC 100 from a plurality of files that have been previously acquired through the camera unit 210 and stored in the sub-storage unit 230. The transmitted file is then stored in the PC 100.

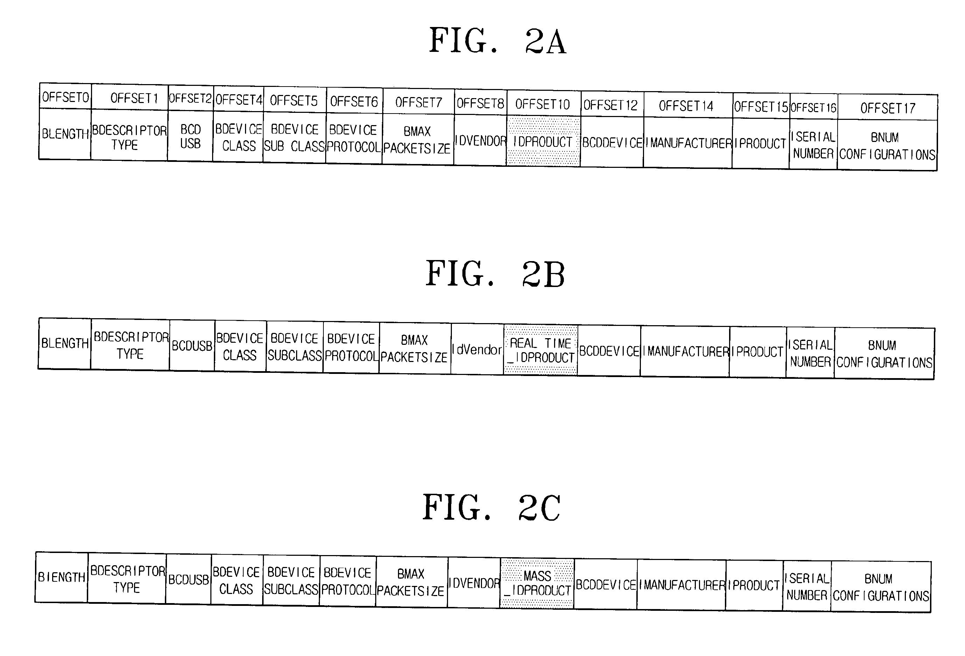

Typically, the descriptor refers to device information for a USB device and has the data structure shown in Figure 2A, formatted according to a known USB standard. The device descriptor shown in Figure 2A and data transmission associated with the USB are known USB specifications and, therefore, description thereof is omitted.

Each firmware stored in the firmware storage unit 222 has associated identifying information (ID). In this embodiment of the present invention, the identifying information is written in an IdProduct (PID) field. It can be seen that the PID field is located at offset 10 and the identifying information is stored in two data bytes.

The descriptors for the real-time streaming firmware and the mass storage firmware are stored in the firmware storage unit 222 in the data structures as shown in Figures 2B and 2C. It can be seen that the identifying information for the real-time streaming firmware is written in the real-time_PID field (Figure 2B), and the identifying information for the mass storage firmware is written in the mass_PID field (Figure 2C).

The sub-storage unit 230, which can be implemented as a flash memory, stores the image data output from the camera unit 210 under the database state. The image data stored in the sub-storage unit 230 can be implemented as either a moving picture or a still image photograph by PC 100 or the digital imaging apparatus 200.

If the PC 100 is running Windows Explorer®, the CPU 130 of PC 100 recognizes the sub-storage unit 230 as a mass storage class device, for example, as a moveable disk. Accordingly, the sub-storage unit 230 can carry out data communications with the PC 100 using, for example, a memory stick.

The identifying information storage unit 240 is a memory device such as SRAM. When a transfer mode is selected via the mode selection unit 254, as will be described below, the identifying information storage unit 240 stores the descriptor of the firmware corresponding to that mode. This allows the PC 100 to be notified of the firmware corresponding to the selected transfer mode in a convenient manner when the digital imaging apparatus 200 is connected to PC 100. The descriptor stored in the identifying information storage unit 240 is updated every time the data transfer mode is changed by the mode selection unit 254.

The key operation unit 250 comprises a plurality of operation keys (not shown) and outputs a signal to the controlling unit 290 for setting or operating functions supported by the digital imaging apparatus 200. In this particular embodiment of the present invention, the key operation unit 250 is provided with a display request unit 252 and a mode selection unit 254.

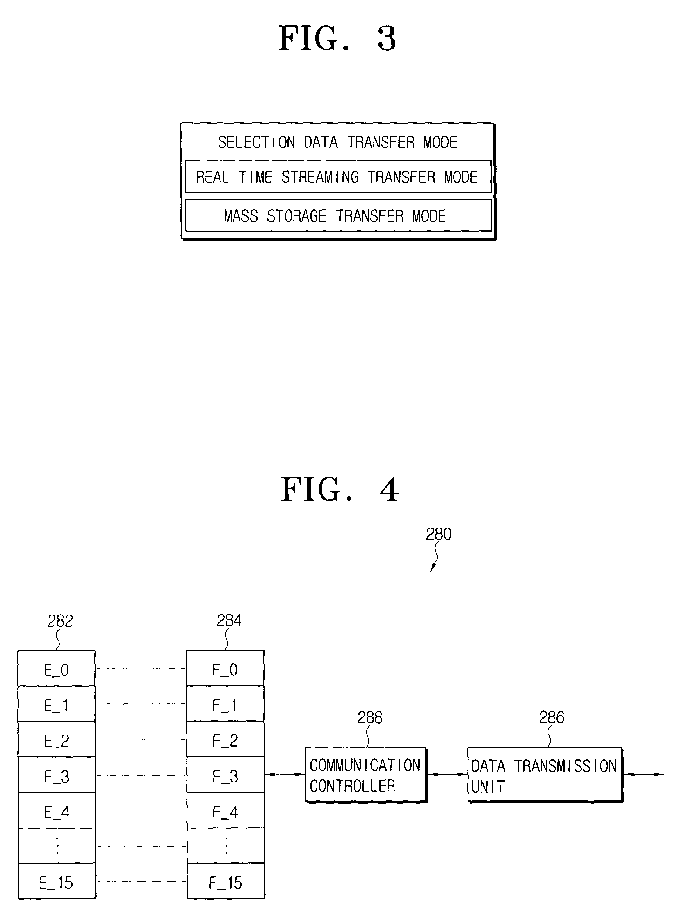

The display request unit 252 outputs a request signal requesting display of the data transfer mode selection screen shown in Figure 3. Where one or more further data transfer modes are provided, these may also be provided on the data transfer mode selection screen.

The mode selection unit 254 outputs to the controlling unit 290 a mode selection signal, which indicates the selection of either the real-time streaming mode or the mass storage mode.

In response to the request signal from the display request unit 252, the display unit 260 displays the data transfer mode selection screen, which includes the two modes described above provided by the digital imaging apparatus 200. The display unit 260 also displays messages, images and other information that allows a user to input appropriate instructions for controlling the operation of the digital imaging apparatus 200.

The OSD processing unit 270 provides various characters and/or image information to be displayed on the display unit 260. If the display request unit 252 of the key operation unit 250 is selected, the OSD processing unit 270 generates the data transfer mode selection screen shown in Figure 3 for display by the display unit 260.

The user can then select one of the two modes using the mode selection unit 254 or a directional key (not shown) of the key operation unit 250.

The USB transmitting module 280 is connected to USB receiving module 160 of PC 100 via the USB transmission cable 300 and transmits image data to the USB receiving module 160 at a high data transmission rate. The USB transmitting module 280 can also receive data from the PC 100 but description thereof is omitted.

Figure 4 is a schematic block diagram of the USB transmitting module shown in Figure 1. With reference to Figure 4, the USB transmitting module 280 comprises an endpoint provision unit 282, a FIFO 284, a data transmission unit 286 and a communication controller 288.

The endpoint provision unit 282 has sixteen endpoints E_0 ∼ E_15. One endpoint E_0 is designated for providing access to configuration, status and control information of the USB transmitting module 280.

The image data to be transmitted to PC 100 is stored in temporary storage areas F_0 ∼ F_15 of the FIFO 284. In this particular embodiment of the present invention, the FIFO 284 is divided into sixteen temporary storage areas F_0 ∼ F_15, each of which corresponds to one of the endpoints E_0 ∼ E_15. The FIFO 284 also includes a buffer in which the descriptor corresponding to the selected transfer mode is temporarily stored.

The descriptor and the image data that is temporarily stored in the FIFO 284 are transmitted to PC 100. The data transmission unit 286 provides the PC 100 with the image data stored in the temporary storage area F_0 ∼ F_15 of the FIFO 284 that corresponds to the endpoint selected by the endpoint provision unit 282 under the control of the communication controller 288.

The communication controller 288 selects at least three of the plurality of the endpoints and then sets a transfer type, a transfer direction for transferring the image data and a packet size of the image data to be temporarily stored in the FIFO 284, for each of the selected endpoints.

The image data is then transferred to the PC 100 according to the transfer type set by the communication controller 288. The transfer type may be, for example, a control transfer mode, an isochronous transfer mode, an interrupt transfer mode or a bulk transfer mode. The control transfer mode is a duplex transfer mode in which information set by the communication controller 288 is sent to PC 100 via the endpoint 0 (E_0). An isochronous transfer mode is usually used to transmit streaming data requiring a constant data transfer rate. An interrupt transfer mode is usually used when polling to check if an interrupt is to be transferred, where the amount of data to be transferred is small. The bulk transfer mode is suitable for use where the amount of data to be transferred is large.

The controlling unit 290 controls general operation of the digital imaging apparatus 200 according to various control programs stored in the main storage unit 220 and key operation signals output by the key operation unit 250. The controlling unit 290 also controls the generation and display of the data transfer mode selection screen, shown in Figure 3, by OSD processing unit 270 and the display unit 260.

When a transfer mode is selected, via the mode selection unit 254, the controlling unit 290 retrieves the descriptor of the firmware corresponding to the selected transfer mode from the firmware storage unit 222 and stores it in the identifying information storage unit 240. In addition, whenever the transfer mode is changed, the controlling unit 290 controls the identifying information storage unit 240 so that the descriptor stored in the identifying information storage unit 240 is updated.

When the digital imaging apparatus 200 is connected to the PC 100, or other external digital equipment, in order to allow image data to be communicated, the controlling unit 290 confirms that the descriptor stored in the identifying information storage unit 240 corresponds to the firmware for the selected data transfer mode, and causes the confirmed descriptor to be transmitted to the USB receiving module 160 of PC 100. The PC 100 receives the descriptor and ensures that the corresponding driver is in a stand-by state.

If the descriptor of the firmware corresponding to the selected transfer mode is transferred to PC 100 and a run command for the selected transfer mode is received from PC 100, the controlling unit 290 causes the firmware corresponding to the selected transfer mode to be executed.

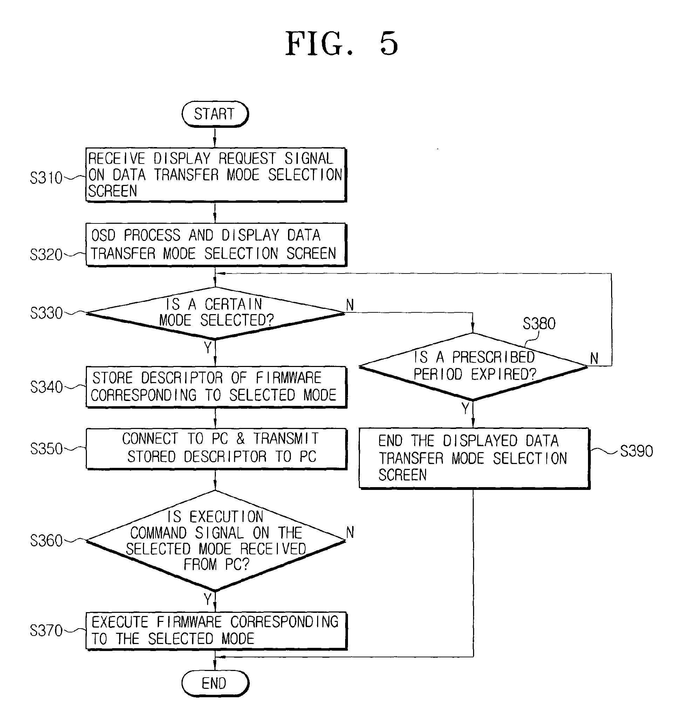

Figure 5 is a flow chart illustrating a method for data transfer mode selection for the digital imaging apparatus 200 shown in Figure 1.

With reference to Figures 1 to 5, a display request signal for the data transfer mode selection screen is received from the display request unit 252 (S310). In response, the controlling unit 290 controls the OSD processing unit 270 and the display unit 260 so that the data transfer mode selection screen shown in Figure 2 is generated and displayed on the display unit 260 (S320).

If a transfer mode is selected via the mode selection unit 254 ("Yes" path from decision step S330), the controlling unit 290 causes the descriptor of the firmware for implementing the selected transfer mode to be stored in the identifying information storage unit 240 (S340). At this time, it is desirable to store only the descriptor of the firmware for the currently selected transfer mode in the identifying information storage unit 240. When the transmitting module 280 of the digital imaging apparatus 200 and the USB receiving module 160 of the PC 100 are connected via the transmission cable 300, the controlling unit 290 causes the descriptor of the firmware stored in the identifying information storage unit 240 to be transmitted to the PC 100 (S350).

If an execution command signal relating to the selected transfer mode is received from the PC 100 ("Yes" path from decision step S360), the controlling unit 290 runs the firmware stored in the firmware storage unit 222 that corresponds to the selected transfer mode. Image data, is transferred from the digital imaging apparatus 200 to the PC 100. Depending on the selected transfer mode, the image data may be acquired and transmitted in real-time or may be image data that has been acquired and stored previously.

On the other hand, if no mode is selected in step S330 within a prescribed time period ("Yes" path from decision step S380), the display of the data transfer mode selection screen on the display unit 260 ends (S390).

The operation of the digital imaging apparatus 200 and PC 100 according to the transfer mode selected in step S330 will now be described.

If a real-time streaming mode is selected in step S330, the descriptor corresponding to selected real-time streaming firmware is stored in the identifying information storage unit 240. The USB transmitting module 280 sets the communication type, the communication direction and so on, corresponding to the selected transfer mode, as directed by the controlling unit 290.

For example, if the real-time streaming mode is selected, the communication controller 288 selects three endpoints E_0, E_1, E_2 for transferring image data corresponding to the selected transfer mode. Also, the communication controller 288 sets the transfer type, the transfer direction and the packet size for each of the selected endpoints E_0, E_1, E_2 as Table 1 below.

**TABLE I**

| | real-time streaming mode | | | mass storage mode | | |
|---|---|---|---|---|---|---|
| Selected endpoint | No. 0 | No. 1 | No.2 | No. 0 | No. 2 | No. 3 |
| Transfer type | Control transfer | Bulk transfer | Bulk transfer | Control transfer | Bulk transfer | Bulk transfer |
| Transfer direction | IN/OUT | OUT | IN | IN/OUT | OUT | IN |
| Packet size | 8byte | 64byte | 64byte | 8byte | 64byte | 64byte |

According to Table 1, if the real-time streaming mode is selected, the communication controller 288 arranges for data to be sent as a control transfer from endpoint 0 (E_0), and as a bulk transfer from the endpoints 1 and 2 (E_1, E_2).

In table 1, 'IN/OUT' indicates duplex communication: 'IN' indicates a direction that is received from PC 100 and 'OUT' indicates a direction that is transmitted to PC 100.

Continuing with the example of a real-time streaming mode, the USB transmitting module 280 is set according to the relevant information in Table 1 and then, on connection of the digital imaging apparatus 200 to the PC 100, the USB host 150 sends a 'reset signal' to the digital imaging apparatus 200.

Next, the controlling unit 290 allows the descriptor (shown in Figure 2B) for the real-time streaming firmware to be retrieved from the identifying information storage unit 240 and stored in a temporary storage area of the FIFO 244. If a descriptor request signal is received from PC 100, the communication controller 288 responds by transmitting the temporarily stored descriptor to the PC 100.

The USB host 150 extracts IdV endor (information identifying the manufacturer) and IdProduct, from the VID and PID fields of the transmitted descriptor respectively and loads the corresponding driver. The CPU 130 of PC 100 maintains the driver in a stand-by state.

Subsequently, if the application program for implementing the real-time streaming mode is selected by a given operation key (not shown) mounted on PC 100 and a signal for activating the application program is received, the camera unit 210 of the digital imaging apparatus 200 begins to acquire image data.

Concurrently, the firmware corresponding to the real-time streaming mode is run by the controlling unit 290 of the digital imaging apparatus 200, and hence the image data that is picked up and signal-processed through the camera unit 210 is transmitted to the PC 100 on a real-time basis. At this time, image data to be transferred to PC 100 is stored in the temporary storage area of the FIFO 284 corresponding to the selected endpoints (E_0, E_2) and is then transferred based on the transfer type set in Table I. In this manner, image data that is acquired through the digital imaging apparatus 200 is displayed as moving picture on the display device (not shown) of PC 100 in real-time.

Alternatively, if a mass storage mode is selected in the decision step S330, the descriptor corresponding to the selected mass storage firmware is stored in the identifying information storage unit 240. The USB transmitting module 280 sets the communication type, the communication direction, and other information. corresponding to the selected transfer mode as directed by the controlling unit 290.

The communication controller 288 then selects three endpoints (E_0, E_2, E_3) for transferring the image data and sets the communication type, the communication direction, and the packet size for each of the selected endpoints (E_0, E_2, E_3). In this example, the communication controller 288 arranges for data to be sent in a control transfer from the endpoint 0 (E_0) and in a bulk transfer from the endpoints 2 and 3 (E_2, E_3), as shown in Table 1.

If the USB transmitting module 280 is set in accordance with the mass storage mode of Table 1 and then the digital imaging apparatus 200 and PC 100 are connected, the USB host 150 sends 'reset signal' to the digital imaging apparatus 200.

Then, the controlling unit 290 retrieves the descriptor (shown in Figure 2C) for the mass storage firmware from the identifying information storage unit 240 and stores it in a temporary storage area of the FIFO 284. If a descriptor request signal is received from the PC 100, the communication controller 288 causes the temporarily stored descriptor as shown in Figure 2C to be transmitted to PC 100.

The USB host 150 extracts and confirms VID and PID information from VID field and PID fields of the transmitted descriptor and loads the corresponding driver. The CPU 130 of PC 100 maintains the driver corresponding to the confirmed firmware descriptor in a stand-by state.

Subsequently, if Windows Explorer® is activated by a given operation key (not shown) on the PC 100, the PC 100 recognizes the sub-storage unit 230 of the digital imaging apparatus 200 as a moveable disk.

Accordingly, if the PC 100 accesses and selects a file stored in the sub-storage unit 230 of the digital imaging apparatus 200, the firmware corresponding to the mass storage mode is run by the controlling unit 290 of the digital imaging apparatus 200, and the selected file is transmitted to the PC 100. At this time, image data to be transmitted to PC 100 is temporarily stored in the temporary storage areas of the FIFO 284 corresponding to the selected endpoints (E_0, E_2), and then is sent in accordance with the transfer type as shown in Table 1.

Thus, at least one file stored in the sub storage unit 230 is sent to, and stored in, the storage medium, such HDD 140, and hence it is possible to carry out playback, edit, and the like on the stored file using image editing software.

As described above, where a digital imaging apparatus 200 with USB communication supports both a real-time streaming mode and a mass storage mode, a certain transfer mode for executing a given firmware is selected before the digital imaging apparatus 200 is connected to the PC 100 and the PC 100 is notified of the relevant descriptor. The PC 100 causes the driver corresponding to the selected firmware to be maintained in a stand-by state. Therefore, if a run command for the selected transfer mode is received from PC 100, the digital imaging apparatus 200 can execute the firmware corresponding to the selected transfer mode.

Where three or more image data transfer modes are provided, it is desirable that a descriptor corresponding to each of the transfer modes is stored in the firmware storage unit 222. Also, the setting of the endpoint for each of the transfer mode can be varied according to the environment, such as the hardware of the digital imaging apparatus 200 or PC 100.

Alternatively, the data transfer mode selection screen can be displayed, and also the transfer mode selected, by operation of a prescribed operation key (not shown), switch (not shown) or other device mounted on the body of the digital imaging apparatus 200. Also, in the case where the digital imaging apparatus 200 is provided with a light-receiving unit (not shown) capable of receiving an optical signal such as infrared ray signal, the transfer mode may be selected using an external adjustment device, such as a remote controller (not shown).

As described above, the present invention allows a digital imaging apparatus 200 to communicate efficiently with an external digital device, such as a PC 100, by selecting one of a plurality of data transfer modes and then connecting the digital imaging apparatus to the external digital device. Although various embodiments of the present invention have been disclosed and described with reference to the appended drawings, such descriptions in the present specification are only for illustrative purposes and are not meant to limit the scope of the present invention.

Also, those who are skilled in the art will appreciate that various modifications, additions and substitutions are possible without departing from the scope of the present invention. Therefore, it should be understood that the present invention is limited only to the accompanying claims and the equivalents thereof, and includes the aforementioned modifications, additions and substitutions.

## Claims

1. A digital imaging apparatus (200) comprising:
means (210) for acquiring image data;
user input means (250, 254) for selecting a data transfer mode to be used to transfer the image data to an external apparatus (100); and
means (280) for transmitting the image data to the external apparatus (100) in accordance with the selected data transfer mode;
**characterised in that**:
said digital imaging apparatus (200) is arranged to transmit to the external apparatus (100) an identifier associated with a program to be used for handling the image data when transferred in said selected data transfer mode.

2. A digital imaging apparatus (200) according to claim 1, arranged to transmit said identifier on connection to said external apparatus (100).

3. A method of transferring image data from a digital imaging apparatus (200) to an external apparatus (100), said method comprising:
selecting a data transfer mode to be used for transferring said image data;
connecting said digital imaging apparatus (200) to said external apparatus (100) in order to enable data communication therebetween;
transmitting an identifier associated with a selected program to be used by the external apparatus (100) for handling said image data;
executing the selected program on the external apparatus; and
transferring said image data according to the selected data transfer mode.

4. A method according to claim 3, wherein the identifier is transmitted to the external apparatus (100) on connection of said digital imaging apparatus (200) to said external apparatus (100).

5. A digital imaging apparatus comprising:
a main storage unit for storing a firmware for at least two data transfer modes for transmitting image data acquired through a camera to an external device in different manners, respectively, and also for storing a descriptor including information for identifying the firmware;
a mode selection unit for outputting a mode selection signal for a certain transfer mode for the at least two data transfer modes;
a transmitting module for connecting to the external device to transmit the image data to the external device, the transmitting module sending the image data in different data transfer manners for each data transfer mode; and
a controlling unit which controls the transmitting module so as to set the transfer manner corresponding to the selected certain transfer mode if the mode selection signal is received from the mode selection unit, and reads out descriptor of firmware corresponding to the selected transfer mode from the main storage unit and provides the descriptor to the transmitting module if the transmitting module is connected to the external device,
wherein the controlling unit allows the read descriptor of the firmware to transmit if a transfer allowance command is received from the external device.

6. The apparatus of claim 5, further comprising a sub-storage unit for storing the image data picked up through the camera,
wherein the at least two data transfer modes include a first mode wherein the image data being currently acquired through the camera is transmitted to the external device in a real-time data stream, and a second mode wherein the image data stored in the sub-storage unit is transmitted to the external device, the main storage unit storing each of the firmware corresponding to the first mode and the second mode and the identifying information.

7. The apparatus of claim 6, further comprising
an on screen display (OSD) processing unit for OSD-processing a data transfer mode selection screen for selecting the certain transfer mode of the first mode and the second mode, and outputs the result of the processing;
a display unit for displaying the OSD processed data transfer mode selection screen; and
a display request unit for generating a display request signal on the data transfer mode selection screen,
wherein if the display request signal is received from the display request unit, the controlling unit OSD-processes and displays the data transfer mode selection screen on the display unit, and receives the mode selection signal for the transfer mode selected by the mode selection unit at the displayed data transfer mode selection screen.

8. The apparatus of claim 7, wherein the transmitting module comprises:
a first-in first-out (FIFO) which is divided into a plurality of temporary storage areas, and the image data for sending to the external device and the descriptor corresponding to the selected transfer mode are temporarily stored in at least one of the temporary storage areas;
a provision unit for providing a plurality of endpoints corresponding to the plurality of temporary storage areas; and
a communication controller that selects at least three endpoints out of the plurality of the endpoints and sets the transfer manner for transferring the image data for each of the selected endpoints, and that allows the image data temporarily stored in the temporary storage areas corresponding to the selected endpoint to be sent to the external device according to the transfer type set.

9. The apparatus of claim 8, wherein if the first mode is selected by the mode selection unit, the communication controller selects endpoint numbers 0 to 2 among the plurality of endpoints, and if the second mode is selected by the mode selection unit, the communication controller selects endpoints numbers 0, 2, and 3 among the plurality of endpoints, and setting the transfer manner for each of the selected endpoints.

10. The apparatus of claim 5, wherein the transmitting module is a universal serial bus interface, and the identifying information of the firmware is stored in the location of offset 10 of the descriptor in the size of two data bytes.

11. The apparatus of claim 6, wherein if the external device and the transmitting module are connected with each other, the sub storage unit is recognized as an accessible movable disc in the external device.

12. A method for selecting data transfer mode of a digital imaging apparatus comprising the steps of:
storing image data being acquired through a camera;
selecting a certain mode of at least two modes for transferring the image data acquired through the camera to an external device in different manners;
connecting to the external device via a transmitting module so as to communicate with the external device after the certain transfer mode is selected;
receiving a transfer allowance command on a descriptor from the external device; and
transferring the descriptor including identifying information of firmware corresponding to the selected transfer mode to the external device.

13. The method of claim 12, wherein each of the firmware for the at least two transfer modes and each of the descriptors including the identifying information of the firmware are stored, respectively, the identifying information being stored in the location of offset 10 of the descriptor in the size of two data bytes.

14. The method of claim 12, prior to the step of selecting the certain transfer mode, further comprising the steps of:
generating a display request command for a data transfer mode selection screen selectable the certain transfer mode of the at least two modes; and
if the display request command is generated, on screen display (OSD)-processing the data transfer mode selection screen, thereby displaying the OSD-processed data transfer mode selection screen,
wherein the step of selecting the certain transfer mode selects the certain transfer mode from the OSD-processed data transfer mode selection screen.

15. The method of claim 12, wherein the at least two data transfer modes includes a first mode wherein the image data being currently acquired through the camera is transferred to the external device in a real-time data stream, and a second mode wherein the image data stored in the storage step is transferred to the external device, the firmware and the descriptor corresponding to the first mode and the second mode being stored, respectively.

16. The method of claim 15, after the step of selecting the certain transfer mode, further comprising the steps of:
selecting at least three endpoints for transferring image data corresponding to the selected transfer mode;
setting a transfer type for transferring the image data for each of the selected three endpoints;
after connecting to the external device, transferring the descriptor corresponding to the selected transfer mode to the external device;
receiving a run command on the selected transfer mode from the external device;
dividing the image data into a prescribed packet size and temporarily storing the divided image data in three temporary storage areas corresponding to the selected three endpoints; and
transferring the temporarily stored image data to the external device according to the set transfer type.

17. The method of claim 16, wherein, in the endpoint selection step, if the first mode is selected in the mode selection step, endpoints numbers 0 to 2 are selected; and if the second mode is selected, endpoints numbers 0, 2 and 3 are selected.

18. The method of claim 12 wherein the transmitting module is a universal serial bus interface.

19. A digital imaging apparatus for transferring image data being acquired through a camera to external device connected via a transmitting module, comprising:
a sub-storage unit for storing the image data being acquired through the camera;
a main storage unit for storing a firmware for a first mode wherein the image data being currently acquired through the camera is sent to the external device in a real-time stream and a firmware for a second mode wherein the image data stored in the sub-storage unit is sent to the external device;
a mode selection unit for applying a mode selection signal for a certain transfer mode of the first mode and the second mode; and
a controlling unit that allows identifying information of firmware corresponding to the selected certain mode to be transferred to the external device, if the mode selection signal is received from the mode selection unit and the transmitting module is connected to the external device.

20. The apparatus of claim 19, further comprising:
an on screen display (OSD) processing unit for OSD-processing a data transfer mode selection screen for selecting the certain transfer mode of the first mode and the second mode and outputs the result of processing;
a display unit for displaying the OSD-processed data transfer mode selection screen; and
a display request unit for generating a display request signal on the data transfer mode selection screen,
wherein if the display request signal is received from the display request unit, the controlling unit OSD-processes and displays the data transfer mode selection screen on the display unit, and the mode selection unit outputs the mode selection signal to the controlling unit by selecting the certain mode of the data transfer mode selection screen displayed on the display unit.

21. The apparatus of claim 19, wherein the transmitting module is applied with a universal serial bus interface.

22. The apparatus of claim 19, wherein if the identifying information of the firmware is transferred to the external device and the execution command for the selected certain mode is received from the external device, the controlling unit allows the firmware corresponding to the selected certain mode to be executed.

23. The apparatus of claim 19, wherein if the external device and the transmitting module are connected with each other, the sub-storage unit is recognized as an accessible movable disc in the external device.

24. A method for selecting data transfer mode of a digital imaging apparatus transferring image data being acquired through a camera to an external device connected via a transmitting module comprising the steps of:
storing the image data being acquired through the camera;
selecting a certain mode among a first mode wherein the image data being currently picked up through the camera is send to the external device in a real-time data streaming and a second mode wherein the image data that is stored in advance is send to the external device; and
if the certain mode is selected and the external device and the transmitting module are connected with each other to perform data communication, transferring the identifying information of firmware corresponding to the selected certain mode to the external device.

25. The method of claim 24, wherein, prior to the step of selecting the certain mode, further comprising the steps of:
generating a display request command for a data transfer mode selection screen selectable the certain mode of the first mode and the second mode; and
if the display request command is generated, on screen display (OSD)-processing the data transfer mode selection screen, thereby displaying the OSD-processed data transfer mode selection screen,
wherein the step of selecting the certain mode selects the certain mode from the OSD-processed data transfer mode selection screen.

26. The method of claim 24, wherein the transmitting module is applied with a universal serial bus interface.

27. The method of claim 24, further comprising the step of:
after the step of transferring the identifying information of the firmware to the external device, receiving the execution command for the selected certain mode from the external device; and
executing firmware corresponding to the selected certain mode.
